# EUROPEAN PATENT SPECIFICATION

(11) **EP 0 479 868 B1**
(45) Date of publication and mention of the grant of the patent: **07.07.1993**
(21) Application number: 90910594.2
(22) Date of filing: 25.06.1990
(51) Int. Cl.: A61C 19/00

(54) **A DENTAL APPARATUS WITH INSTRUMENT HOSES FOR SELECTIVE CONNECTION WITH DIFFERENT INSTRUMENTS**
DENTALVORRICHTUNG MIT LEITUNGEN ZUM SELEKTIVEN ANSCHLUSS VON VERSCHIEDENEN INSTRUMENTEN
APPAREIL DENTAIRE DOTE DE TUYAUX D'INSTRUMENTS PERMETTANT UNE CONNEXION SELECTIVE A DIFFERENTS INSTRUMENTS

(30) Priority: 28.06.1989 DK 3206/89
(43) Date of publication of application: 15.04.1992
(73) Proprietor: FLEX DENTAL A/S, DK-2605 Brondby (DK)
(72) Inventor: SORENSEN, Kim, DK-2930 Klampenborg (DK); HANSEN, Flemming, Allan, DK-2920 Charlottenlund (DK)
(74) Representative: Plougmann, Vingtoft & Partners A/S
(86) International application number: DK9000161
(87) International publication number: WO9100067

(56) References cited:
- EP-A- 0 042 267
- EP-A- 0 042 268
- EP-A- 0 042 269
- DE-B- 2 549 177

## Description

### A dental apparatus with instrument hoses for selective connection with different instruments.

The invention relates to a dental apparatus with a number of instrument units, each comprising an instrument hose with an associated connecting part with which a number of different dental instruments may be selectively connected, each instrument hose comprising supply ducts for operational media, such as electricity, water and air, inclusive of ducts for water and air for use as coolant spray and chip air.

From the accepted DE-B-25 49 177 it is known to provide the instrument hoses of a dental apparatus with connecting pieces by means of which various instruments may be selectively coupled to a specific instrument hose, the instrument hose comprising supply cables and/or ducts for all operational media used for the various instruments, i.e. electric current, light, turbine air together with air and water for use as coolant spray and so-called chip air.

According to EP-C-0 042 269 it is known with respect to the operation of turbine driven or electrically driven drilling instruments to control the amounts of water and air in the coolant spray used for operating such instruments, but for this control it has so far been necessary to make use of simple mechanical adjustment valves, e.g. needle valves specifically associated with the individual instruments which according to said prior art are permanently connected with a respective instrument hose.

Moreover, US-A-3 673 709 deals with a comparatively complicated valve arrangement for use in controlling the amounts of water and air in a coolant spray, but in this case too, with individual adjustment valves for each respective of the instruments that are fixedly connected with a respective instrument hose.

It is the object of the invention to provide a simplified possibility of controlling, irrespective of the selected instrument, the water and air amounts in a coolant spray particularly for use in a dental apparatus of the above-mentioned type, having the possibility of selectively connecting more instruments with one and the same hose.

In this respect the dental apparatus according to the invention is characterized in that the water and air supply ducts for each instrument hose for use as coolant spray and chip air are connected with common water and air ducts through proportionally adjustable magnet valve members adapted for receiving electric setting signals from a control circuit which is supplied with an instrument identification code through a signal transmitting cable from the instrument connected with the hose and is further connected with an operational parameter memory containing stored operational parameters for the individual instruments for generating setting signals for said valve members adapted to the operation of the actual instrument.

Through the combined use of proportionally adjustable, electrically controlled magnet valve members for the water and air ducts of each instrument hose and a control circuit receiving identification codes from the instruments coupled to the instrument hoses, a completely individual, controllable composition of water and air may be obtained in the coolant spray used in connection with each instrument.

Said proportionally adjustable valves may be individually associated with each instrument hose, but in a preferred embodiment of a dental apparatus according to the invention a substantially simplified valve arrangement is obtained in that said proportionally adjustable magnet valve members are common to the water and air supply ducts of all instrument hoses.

In this preferred embodiment each of the instrument hoses may comprise a separate duct for driving air for an air turbine driven drilling instrument and a separate return air duct, said separate driving air ducts being connected with a further proportionally adjustable magnet valve member common to all of the instrument hoses.

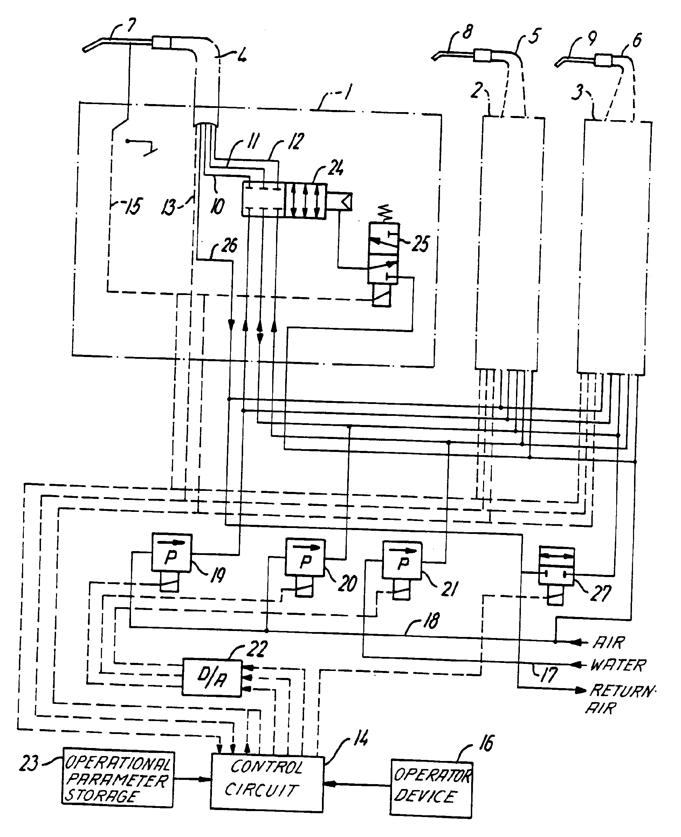

The invention will now be explained in detail with reference to the block diagram of the instrument unit schematically shown in the drawing and associated control and operator devices in a preferred embodiment of the dental apparatus.

Each of the instrument units 1, 2 and 3 is provided with an instrument hose 4, 5 and 6, respectively, with a connecting piece by means of which various dental instruments 7, 8 and 9, respectively, may be selectively connected with the instrument hose, e.g. air turbine instruments or electric-motor driven drilling instruments, an ultrasonic scaler, a composite hardening lamp, etc., such as known per se from the above-mentioned DE-B-25 49 177.

As only illustrated for instrument hose 4 of the unit, each of hoses 4 to 6 includes for this purpose supply ducts for all operational sources necessary for energizing the various instruments. For the sake of clearness all ducts for the operational sources, water and air, are shown in solid lines while the dashed lines indicate the conducting paths of the electric control and energizing signals.

In the illustrated embodiment, hose 4 thus includes an air duct 10 for turbine driving air, an air duct 11 for spray and chip air for use in coolant spray used in connection with drilling instruments as well as for pure air blow and a water duct 12 for spray water besides a conduit, not shown, for electric current for an electric motor driven drilling instrument.

Moreover, hose 4 includes a signal transmitting cable 13 forming part of an instrument identification system by means of which the central control circuit 14 of the dental apparatus receives information about the instrument actually connected with hose 4.

A lifting-off signal generator which over a signal transmitting cable 15 transmits a lifting-off signal to the control circuit 14 upon lifting off the actual instrument from its holder is, moreover, in a manner known per se connected with the instrument carrier.

Moreover, the dental apparatus may in a known manner be provided with a blocking coupling ensuring that only one instrument at a time is energized by means of the operator device 16 connected with the control circuit 14 and which is typically a pedal switch, e.g. a multi-function switch of the type disclosed in the above mentioned EP-C-0 042 269 and EP-C-0 042 268.

In the illustrated embodiment the individual control of the air and water amounts supplied to ducts 10 to 12 in instrument hoses 4 to 6 is obtained in that the supply ducts 12 for all of hoses 4 to 6 are connected with a common water duct 17 and supply ducts 10 and 11 with a common air duct 18 through proportionally adjustable magnet valve members 19, 20 and 21 for turbine air, spray air and spray water. Valves 19, 20 and 21 that are thus common to instruments units 1, 2 and 3 in the illustrated embodiment are supplied with electric setting signals from control circuit 14 through a digital-to-analog converter 22 in dependence on the identification code transmitted for each instrument unit through signal transmitting cable 13 for the instrument coupled to the instrument hose, an operational parameter memory 23 for control circuit 14 being connected to generate setting signals for valves 19 to 21 suitable for energizing the actual instrument.

In series with the proportionally adjustable valves 19 to 21 each of the instrument units 1 to 3 in the illustrated embodiment includes a valve 24 selectively actuated by selection of the actual instrument on the basis of the lifting-off signal transmitted through the signal transmitting cable 15, said valve being illustrated in the drawing as a simple pneumatically operable ON/OFF valve actuated from the common air duct 18 via a magnet valve 25 controlled from control circuit 14.

Each of the instrument hoses 4 to 6 further includes a return air duct 26 which in practice may be constituted by the part of the hose cross-section encircling the remaining ducts. Return air duct 26 is in a known manner utilized for recycling air by making use of a turbine driven drilling instrument and may discharge into a common air outlet in connection with an oil sump. An air escape valve 27 common to instrument units 1 to 3 is further connected with the chip air duct 11 and is controlled alternatingly with valve 20 so that it is open when valve 20 is closed, thereby serving to a quick ventilation and pressure equalizing of air duct 11 after each chip air blow.

This arrangement of the valve system of the dental apparatus provides particularly for obtaining that pre-programmed operational parameter values for spray water and spray and chip air may be stored in the operational parameter storage 23 for each of the possible dental instruments to be used in each of units 1 to 3. Said operational parameters may be adjusted by means of operator device 16, e.g. as described in the above EP-C-0 042 269.

Control circuit 14 which may be constituted by microprocessor includes at any time the identification codes keyed for the instruments coupled to their respective instrument hose.

When a determined instrument hose with associated instrument is lifted off for use, valve 24 is actuated and control circuit 14 outputs the actual operational parameter values from storage 22 for the selected instrument. When operator device 16 is then actuated control circuit 14 emits through digital-to-analog converter 22 the relevant electric setting signals for valves 19 to 21.

In comparison with prior art dental apparatuses, e.g. as disclosed in the above EP-C-0 042 269, according to which each instrument unit necessitates separate valve members from all of the operational parameters, the invention provides for obtaining a completely individually controllable adjustment of water and air amounts in a dental apparatus, in which various instrument may be coupled to the individual instrument hoses, and in the illustrated embodiment also for a simplified structure of the valve system.

In view of the fact that each instrument hose besides water and air ducts also accommodates electric conduits, control circuit 14 may according to a particular feature of the invention be designed so that the connecting piece of the hose upon each change of instrument is automatically cleaned of water droplets by a selective air blow through one of the air ducts, preferably the turbine driven air duct 10.

Control circuit 14 and the operational parameter storage 22 may be designed so that more sets of operational parameter values may be stored, e.g. individually pre-programmed values in a multi-user system.

## Claims

1. A dental apparatus with a number of instrument units (1 to 3), each comprising an instrument hose (4 to 6) with an associated connecting piece with which a number of different dental instruments (7 to 9) may be selectively connected, each instrument hose comprising supply ducts (10 to 12) for operational media, such as electricity, water and air, inclusive of ducts for water and air for use as coolant spray and chip air, characterized in that the water and air supply ducts (11, 12) for each instrument hose (4 to 6) for use as coolant spray and chip air are connected with common water and air ducts (17, 18) through proportionally adjustable magnet valve members (20, 21) adapted for receiving electric setting signals from a control circuit (14) which is supplied with an instrument identification code through a signal transmitting cable (13) from the instrument connected with the hose and is further connected with an operational parameter memory (23) containing stored operational parameters for the individual instruments for generating setting signals for said valve members adapted to the operation of the actual instrument.

2. A dental apparatus as claimed in claim 1, characterized in that said proportionally adjustable magnet valve members (20, 21) are common to the water and air supply ducts (11, 12) of all instrument hoses (4 to 6).

3. A dental apparatus as claimed in claim 2, characterized in that in association with each instrument hose (4 to 6) there is further provided a valve member (24) operated by selection of the actual instrument (7 to 9) in series with the common proportionally adjustable valve members (20, 21).

4. A dental apparatus as claimed in claims 1, 2 or 3, characterized in that the apparatus further includes a pedal switch (16) adapted for operating the instruments and for adjusting the operational parameters stored in said memory (23).

5. A dental apparatus as claimed in any of the preceding claims, characterized in that the control circuit (14) comprises a microprocessor storing for each instrument working programs containing said operational parameters.

6. A dental apparatus as claimed in claim 5, characterized in that the microprocessor (14) for at least one instrument includes several stored processing programs of different operational parameter values and that a determined working program for a given instrument is selected by means of a monitoring and operator display associated with the microprocessor.

7. A dental apparatus as claimed in any of the preceding claims, characterized in that the proportionally adjustable valve for the air duct (11) of each instrument hose is used for controlling the air amount both in a coolant spray applied during working of a selected instrument and in an automatically or selectively activated chip air blow.

8. A dental apparatus as claimed in claim 2, characterized in that each of the instrument hoses comprises a separate duct (10) for driving air for an air turbine driven drilling instrument and a separate return air duct (26), said separate driving air ducts being connected with a further proportionally adjustable magnet valve member (19) common to all of the instrument hoses (4 to 6).

9. A dental apparatus as claimed in claim 7, characterized in that the spray and chip air supply duct (11) for all of the instrument hoses is connected with an air escape valve (27) common to the instrument units and activated alternatingly with the proportionally adjustable valve (20) for said supply duct.

10. A dental apparatus as claimed in claim 8, characterized in that the control circuit (14) is adapted to selectively actuate the valves (19, 20) connected with the air ducts (10, 11) of an instrument hose (4 to 6) upon changing the instrument (7 to 9) coupled to that hose for generating a cleaning air blow through said driving air duct to the return air duct (26).

## Patentansprüche

1. Zahnärztliche Vorrichtung mit einer Anzahl von Instrumenteinheiten (1-3), jede umfassend einen Instrumentenschlauch (4-6) mit einem dazugehörigen Anschlussstück, an das eine Anzahl von verschiedenen zahnärztlichen Instrumenten (7-9) selektiv verbunden werden können, wobei jeder Instrumentenschlauch Versorgungskanäle (10-12) für die Betriebsmittel Elektrizität, Wasser und Luft, hierunter Kanäle für Wasser und Luft zur Verwendung als Spray-Kühlmittel und Chip-Luft, umfasst, dadurch **gekennzeichnet,** dass für jeden Instrumentenschlauch (1-3) die als Spray-Kühlmittel und Chip-Luft benutzten Versorgungskanäle (10-12) an gemeinsame Wasser- bzw. Luftkanäle (17, 18) über proportional einstellbare Magnetventilorgane (20, 21) angeschlossen sind, denen von einer Regelschaltung (14) elektrische Einstellsignale zugeführt werden, welche Regelschaltung von dem mit dem Schlauch verbundenen Instrument durch ein Signalübertragungskabel (13) einen Instrument-Identifikations-Code erhält, und ferner an einen Betriebsparameterspeicher (23), der gespeicherte Betriebsparameter zur Erzeugung der für den Betrieb des betreffenden Instruments angepassten Einstellsignale für erwähnte Ventilorgane enthält, angeschlossen ist.

2. Zahnärztliche Vorrichtung nach Anspruch 1, dadurch **gekennzeichnet,** dass die proportional einstellbaren Magnetventilorgane (20, 21) für die Wasser- und Luftversorgungskanäle (11, 12) sämtlicher Instrumentenschläuche (4-6) gemeinsam sind.

3. Zahnärztliche Vorrichtung nach Anspruch 2, dadurch **gekennzeichnet,** dass in Verbindung mit jedem Instrumentenschlauch (4-6) ferner ein bei der Wahl des betreffenden Instruments (7-9) aktiviertes Ventilorgan (24) in Reihe mit den gemeinsamen proportional einstellbaren Ventilorganen (20, 21) vorgesehen ist.

4. Zahnärztliche Vorrichtung nach Anspruch 1, 2 oder 3, dadurch **gekennzeichnet,** dass die Vorrichtung ferner eine zur Instrumentenbedienung und zur Einstellung der im Speicher (23) gelagerten Betriebsparameter vorgesehene Fusschaltung (16) umfasst.

5. Zahnärztliche Vorrichtung nach einem der vorhergehenden Ansprüche, dadurch **gekennzeichnet,** dass die Regelschaltung (14) einen Mikroprozessor umfasst, der für jedes Instrument gespeicherte Arbeitsprogramme mit den erwähnten Betriebsparametern enthält.

6. Zahnärztliche Vorrichtung nach Anspruch 5, dadurch **gekennzeichnet,** dass der Mikroprozessor (14) für mindestens ein Instrument mehrere gespeicherte Arbeitsprogramme mit unterschiedlichen Betriebsparameterwerten umfasst, und dass ein für ein bestimmtes Instrument gegebenes Arbeitsprogramm mit Hilfe eines an den Mikroprozessor angeschlossenen Überwachungs- und Bedienungsschirm gewählt wird.

7. Zahnärztliche Vorrichtung nach einem der vorhergehenden Ansprüche, dadurch **gekennzeichnet,** dass das proportional einstellbare Ventil für den Luftkanal (11) eines jeden Instrumentenschlauchs zum Einstellen der Luftmenge sowohl in einem unter Arbeit eines ausgewählten Instruments verwendeten Spray-Kühlmittel als in einem automatisch oder wahlweise aktivierten Chip-Heissblasen benutzt wird.

8. Zahnärztliche Vorrichtung nach Anspruch 2, dadurch **gekennzeichnet,** dass jeder Instrumentenschlauch einen separaten Kanal (10) für Treibluft für ein durch Luftturbine angetriebenes Bohrinstrument und einen separaten Rückluftkanal (26) umfasst, welche separaten Treibluftkanäle an ein für alle Instrumentenschläuche (4-6) gemeinsames zusätzliches proportional einstellbares Magnetventil (19) angeschlossen sind.

9. Zahnärztliche Vorrichtung nach Anspruch 7, dadurch **gekennzeichnet,** dass der Spray- und Chip-Luftversorgungskanal (11) für sämtliche Instrumententenschläuche an ein für die Instrumenteinheiten gemeinsames Luftauslassventil (27) angeschlossen ist, das abwechselnd mit dem proportional einstellbaren Ventil (20) für erwähnten Zufuhrkanal betätigt wird.

10. Zahnärztliche Vorrichtung nach Anspruch 8, dadurch **gekennzeichnet,** dass die Regelschaltung (14) dazu vorgesehen ist bei Auswechseln des an einen Instrumentenschlauch (4-6) gekoppelten Instruments (7-9) die mit den Luftkanälen (10, 11) verbundenen Ventile (19, 20 ) zur Erzeugung eines Durchblasens von Reinigungsluft durch erwähnten Treibluftkanal zum Rückluftkanal (26) selektive zu beeinflussen.

## Revendications

1. Appareil dentaire comportant un nombre de groupes d'instruments (1 à 3), chacun comprenant un tuyau d'instrument (4 à 6) avec une pièce associée de connexion sélective à un nombre d'instruments dentaires différents (7 à 9), chaque tuyau d'instrument comportant des conduites d'alimentation (10 à 12) en moyen de travail comme par exemple électricité, eau, air, y compris conduites d'eau et d'air utilisés comme spray de refroidissement et air "chip", caractérisé en ce que les conduites d'alimentation de chaque tuyau d'instrument (4 à 6) en eau et air à utiliser comme spray de refroidissement et air de séchage sont connectées à des conduites communes d'eau et d'air (17, 18) par l'intermédiaire d'éléments (20, 21) de soupape magnétique à réglage proportionnel, conçus pour recevoir des signaux électriques de réglage en provenance d'un circuit de commande (14) qui, par un câble (13) de transmission de signal, reçoit un code d'identification d'instrument provenant de l'instrument connecté à la conduite, et qui, de plus, est relié à une mémoire (23) de paramètres opératoires, dans laquelle sont mémorisés les paramètres opératoires de chaque instrument, afin de produire des signaux de réglage desdits éléments de soupape, adaptés à la fonction de l'instrument actuel.

2. Appareil dentaire selon la revendication 1, caractérisé en ce que lesdits éléments de soupape magnétique de réglage proportionnel sont communs aux conduites (11, 12) d'alimentation en eau et air pour tous les tuyaux d'instrument (4 à 6).

3. Appareil dentaire selon la revendication 2, caractérisé en ce qu'en association avec chaque tuyau d'instrument (4 à 6), Il est, de plus, prévu un élément de soupape (24) qui, lors du choix de l'instrument actuel (7 à 9), est commandé en série avec les éléments (20, 21) communs de soupape à réglage proportionnel.

4. Appareil dentaire selon les revendications 1, 2 ou 3, caractérisé en ce que l'appareil comprend, de plus, une pédale de contact (16) conçue pour commander les instruments et pour régler les paramètres opératoires mémorisés dans ladite mémoire (23).

5. Appareil dentaire selon l'une quelconque des revendications précédentes, caractérisé en ce que le circuit de commande (14) comprend un microprocesseur mémorisant, pour chaque instrument, des programmes de travail contenant lesdits paramètres opératoires.

6. Appareil dentaire selon la revendication 5, caractérisé en ce que pour au moins un instrument, le microprocesseur (14) comporte plusieurs programmes de traitement à valeurs différentes de paramètre opératoire, et en ce qu'un programme déterminé de travail pour un instrument donné est choisi à l'aide d'un écran opérateur/surveillance associé au microprocesseur.

7. Appareil dentaire selon l'une quelconque des revendications précédentes, caractérisé en ce que la soupape à réglage proportionnel de la conduite d'air (11) de chaque tuyau d'instrument est utilisée pour commander la quantité d'air à la fols dans un spray de refroidissement appliqué pendant le travail avec un instrument choisi et dans le soufflage d'air chip, commandé automatiquement ou sélectivement.

8. Appareil dentaire selon la revendications 2, caractérisé en ce que chacun des tuyaux d'instrument comprend, une conduite séparée (10) d'air de commande d'un instrument de forage actionné par une turbine à air et une conduite séparée (26) de retour d'air, lesdites conduites séparées d'air de commande étant connectées à un élément supplémentaire (19) de soupape magnétique à réglage proportionnel, commun à tous les tuyaux d'instrument (4 à 6).

9. Appareil dentaire selon la revendication 7, caractérisé en ce que la conduite (11) d'alimentation de spray et d'air chip pour l'ensemble des tuyaux d'instrument est branchée à une soupape (27) d'échappement d'air, commune aux groupes d'instruments et commandée en alternance avec la soupape (20) à réglage proportionnel pour ladite conduite d'alimentation.

10. Appareil dentaire selon la revendication 8, caractérisé en ce que le circuit de commande (14) est conçu pour sélectivement actionner les soupapes (19, 20) connectées aux conduites d'air (10, 11) d'un tuyau d'instrument (4 à 6) lors du changement d'instrument (7 à 9) accouplé à ce tuyau, afin de produire une impulsion d'air de nettoyage à travers ladite conduite d'air de commande vers la conduite (26) d'air de retour.
